# EUROPÄISCHE PATENTSCHRIFT

(11) **EP 1 375 591 B1**
(45) Veröffentlichungstag und Bekanntmachung des Hinweises auf die Patenterteilung: **17.09.2008**
(21) Anmeldenummer: 03013198.1
(22) Anmeldetag: 12.06.2003
(51) Int. Cl.: C08L 63/00, B29C 70/48, C08G 59/50

(54) **Verfahren zur Herstellung eines faserverstärkten Produktes auf Epoxidharzbasis**
Method for producing a fiber reinforced product with an epoxy-based matrix
Méthode de production d'un produit composite renforcé de fibres avec une matrice à base d'epoxy

(30) Priorität: 26.06.2002 DE 10228649
(43) Veröffentlichungstag der Anmeldung: 02.01.2004
(73) Patentinhaber: Hexion Specialty Chemicals GmbH, 58642 Iserlohn-Letmathe (DE)
(72) Erfinder: Palinsky, Andreas, Dr., 47445 Moers (DE); Dey, Holger, 47495 Rheinberg (DE); Stieber, Ulrich, 45475 Mühlheim (DE); Tumminello, Antonietta, 47167 Duisburg (DE); Veit, Peter, 51381 Leverkusen (DE); Reichwein, Heinz-Gunter, 47475 Kamp-Lintfort (DE); Schillgalies, Jürgen, Dr., 47445 Moers (DE)

(56) Entgegenhaltungen:
- EP-A- 0 490 230
- WO-A-98/12260
- US-A- 4 331 582
- US-A- 4 853 434
- US-A- 5 317 068
- HENNISSEN M B: "AUTOMOTIVE APPLICATIONS OF EPOXY RESIN TRANSFER MOULDING" INGENIEURS DE L'AUTOMOBILE, RAIP. BOULOGNE, FR, Nr. 722, 1. Juni 1998 (1998-06-01), Seiten 40,42-45, XP000774743 ISSN: 0020-1200

## Beschreibung

Die Erfindung betrifft ein Verfahren zur Herstellung eines faserverstärkten Produktes auf Epoxidharzbasis gemäß dem Anspruch 1.

Solche Verfahren sind aus dem Stand der Technik als Resin-Transfer-Moulding (RTM)-Verfahren bekannt. Bei diesem Verfahren wird ein faserverstärktes Produkt durch zumindest folgende Schritte hergestellt:
- Gegebenenfalls Vorformen des Fasergutes,
- Einlegen des Fasergutes in eine gegebenenfalls mit Trennmitteln beschichtete Form und Schließen der Form, wobei die Formgebung des Fasergutes erfolgt,
- Injektion eines Harzgemisches unter üblichem Druck,
- Vernetzung des Gemisches bei gegebenenfalls beheizter Form und
- Entformen des Bauteils.

Für dieses Verfahren können nur Harzmischungen mit entsprechenden Eigenschaften, die einerseits die Durchführung des Verfahrens überhaupt ermöglichen (einfache Injizierbarkeit, Viskosität) und andererseits zu Produkten mit gewünschten mechanischen oder chemischen Eigenschaften führen, verwendet werden. So sind Harzmischungen auf der Basis von Polyestern, Vinylestern und Epoxiden gebräuchlich. Epoxidharze haben im Vergleich zu Polyestern und Vinylestern den besonderen Vorteil, dass sie geringe Schwindungswerte aufweisen, was generell einen positiven Einfluss auf die mechanischen Kenndaten des Endproduktes hat.

Zum Beispiel ist aus Hennisen MB: "Automative Applications of Epoxy Resin Transfer Moulding" Ingenieurs de L'Automobile, Raip. Boulogne, FR. Nr. 722, 1. Juni 1998 (1998-06-01), Seiten 40, 42-45, XP000774743 ISSN: 0020-1200 die Verwendung von Epoxidharzen für das RTM bekannt.

Werden herkömmliche Harzmischungen auf Basis von Epoxiden für das RTM Verfahren verwendet, so sind sie zwar einfach zu injizieren, verleihen dem Endprodukt im allgemeinen aber eine unzureichende Schlägzähigkeit und Schadenstoleranz gegenüber Stoßeinflüssen, was für viele Anwendungen allerdings erforderlich ist.

Zur Verbesserung der Schlagzähigkeit von Harzen ist es u. a. bekannt, pulverförmige weiche Füllstoffe, wie Gummimehl mit einem Teilchendurchmesser von ca. 5 · 10⁻⁵ m bis 1 · 10⁻³ m in die Harzmischungen einzumischen. Allerdings wird mit einer solchen Maßnahme die Schlagzähigkeit noch nicht ausreichend verbessert. Außerdem führte die Verwendung von festen Partikeln im RTM-Verfahren dazu, dass die festen Teilchen nicht das Fasergut durchdringen konnten. Die Folge davon war, dass das Fasergut nicht mit einer homogenen Harzmischung beschichtet werden konnte, was sich negativ auf die Eigenschaften des Endproduktes auswirkte.

Aufgabe der hier vorliegenden Erfindung ist es nunmehr, ein im RTM-Verfahren hergestelltes Produkt bereitzustellen, das eine hervorragende Schlägzähigkeit besitzt, ohne das weitere mechanische oder thermische Kennwerte beeinflusst werden.

Gelöst wird diese Aufgabe erfindungsgemäß durch ein Verfahren zur Herstellung eines faserverstärkten Produktes auf Epoxidharzbasis gemäß dem Anspruch 1.

Durch die Zugabe von Elastomerpartikeln mit der entsprechenden Größe, Molekulargewicht und der modifizierten Oberfläche wird im allgemeinen eine erhebliche Erhöhung der Viskosität des Harzes erwartet, was auf erhebliche Verarbeitungsprobleme während des RTM-Verfahrens schließen lassen würde. Überraschenderweise trat dieses nachteilige Phänomen aber nicht auf.
Weiterhin konnte auch der eingangs beschriebene und erwartete Nachteil bezüglich der Durchdringbarkeit der Elastomerpartikeln durch das Fasergut nicht beobachtet werden, sodass eine feine und homogene Verteilung der Elastomerpartikeln im Bauteil gewährleistet werden kann.
Das entformte Produkt wies weiterhin eine erhöhte Schlagzähigkeit im Vergleich zu herkömmlichen auf Epoxidharz basierende Harze für das RTM Verfahren auf. Im Vergleich zu nicht mit den entsprechenden Elastomerpartikeln modifizierten Mischungen konnte die Wasseraufnahme der Endprodukte (bei Lagerung von Wasser) deutlich verringert werden, was auf verbesserte Hydrolysebeständigkeit schließen lässt .Verbunden mit der durch Epoxidharze erreichbaren hohen Glasübergangstemperatur (> 200 °C) können nunmehr im RTM-Verfahren hergestellte Produkte auch für höchste Anforderungen ausgerichtete Einsatzgebiete (z. B. Luftfahrt) unkompliziert hergestellt werden.

Als Epoxidharze werden bevorzugt eingesetzt Diglycidylether der Bisphenole, insbesondere von Bisphenol A und F sowie daraus hergestellte Advancementharze, epoxidierte Novolake, epoxidierte Fluorenonbisphenole, epoxidierte o- oder p-Aminophenole sowie epoxidierte Polyadditionsprodukte aus Dicyclopentadien und Phenol. Sie haben in der Regel ein Epoxidäquivalentgewicht von 170 bis 450 g. Der Gewichtsanteil des Epoxidharzes bezogen auf alle Bestandteile des Gemisches beträgt 50-70 Gewichtsteile, bevorzugt 60-70 Gewichtsteile. Multifunktionelle Epoxidharze sind aufgrund ihrer Funktionalität und sich daraus ergebenden Anpassungsmöglichkeiten an andere Bestandteile der Mischung oder auch an das Fasergut besonders geeignet. Als besonders bevorzugt haben sich tetrafunktionelle Epoxidharze aufgrund ihrer sehr guten mechanischen Eigenschaften sowie ihrer hohen Warmformbeständigkeit erwiesen. Als wiederum besonders davon bevorzugt sei das Tetraglycidyldiaminodiphenylmethan genannt, da die daraus hergestellten Endprodukte eine hervorragende Beständigkeit gegenüber Wasser bei erhöhter Temperatur und auch gegenüber Chemikalien aufweisen. Diese Eigenschaften verbunden mit der hohen Glasübergangstemperatur (> 200 °C) ermöglichen den Einsatz der Endprodkte im Luft- und Raumfahrtbereich.

Als weiterer Bestandteil für die Harzmischung ist ein aromatisches Diamin als Härterkomponente im stöchiometischen Verhältnis zum Harz erforderlich. Bezogen auf eine Epoxidgruppe sind 80 bis 100 % der stöchiometrischen Menge des aromatischen Diamins notwendig. Das bedeutet das in dem Gemisch 25 bis 50 Gewichtsteile bevorzugt 25 bis 35 Gewichtsteile bezogen auf alle Bestandteile des Gemisches eines Diamins enthalten sind. Beispielhaft hierfür ist das Diaminodiphenylsulfon und das 4-4'-Diaminodiphenylmethan. Weiterhin ist es von Vorteil, wenn das aromatische Diamin in zumindest einer ortho-Position zumindest einer Aminogruppe eine Alkylgruppe, insbesondere eine Methyl-, Ethyl- oder Isopropylgruppe, aufweist. Damit wird die cancerogene Wirkung des aromatisches Diamins im wesentlichen ausgeschaltet. Beispiel hierfür ist das 4,4' Methylenbis(2,6-diisopropylanilin). Die Verwendung von Diaminodiphenylmethan hat den Vorteil, das es zu den restlichen Bestandteilen (insbesondere in das Epoxidharz) eingemischt werden kann ohne dass diese Mischung bereits bei Raumtemperatur reagiert. Somit wird für das RTM-Verfahren ein bei Raumtemperatur lagerstabile Einkomponenten-System bereitgestellt, was Vorteile bei der Lagerung, beim Transport und bei der Anwendung vor Ort mit sich bringt. Weiterhin hat die Verwendung von Diaminodiphenylmethan den Vorteil, dass es eine über mehrere Stunden bei erhöhte Temperatur gute Verarbeitbarkeit der Harzmischung ermöglicht.

Ein weiterer Bestandteil für die Harzmischung des erfindungsgemäßen Verfahrens sind dreidimensional vernetzte Elastomerparikeln auf der Basis von Polyorganosiloxane, wie sie in der DE-OS 36 34 084 beschrieben sind in einer Konzentration von 2-25 Gewichtsteile, bevorzugt 2-5 Gewichtsteile bezogen auf das Gewicht des gesamten Gemisches. Die Menge der verwendeten Elastomerpartikeln richtet sich nach den gewünschten Eigenschaften des Endproduktes und kann entsprechend variiert werden.

Der mittlere Partikeldurchmesser der Elastomerpartikeln beträgt 1·10⁻⁸ m bis 5 · 10⁻⁶ m, bevorzugt 0,1 bis 3 µm. Das mittlere Molekulargewicht beträgt 1000 bis 100000, bevorzugt 1200 bis 30000. Die Oberfläche der Elastomerpartikeln ist im wesentlichen mit reaktiven Gruppen modifiziert worden, die in der Lage sind, mit einem Epoxidharz eine chemische Reaktion einzugehen.
So können solche Polyorganosiloxane verwendet werden, die bevorzugt unter der Formel - (R₂SiO)- zusammengefasst werden können. Dabei können R die in der DE-OS 36 34 084 beschriebenen Reste sein. Auch sind Mischungen aus verschiedenen Polyorganosiloxanen möglich. So können vorzugsweise Polyorganosiloxane der allgemeinen Formel -(R'₂SiO)ₓ-(R"₂SiO)_{y}- mit denen in der DE-OS 36 34 084 offenbarten Resten eingesetzt werden. Generell bevorzugt werden Polyorganosiloxane, bei denen mindestens 50 % der Reste R, R', R" Methyl- und/oder Phenylgruppen darstellen. Die Oberfläche der Polyorganosiloxane weist reaktive Gruppen auf, die in der Lage sind mit dem Epoxidharz eine chemische Bindung einzugehen. Die reaktiven Gruppen an der Oberfläche des Polyorganosiloxans sind z.B. bevorzugt eine Epoxidgruppe oder aber auch eine Amino-, Carboxy- und/oder Carbonsäureanhydridgruppe. Wie diese Oberflächenmodifizierzng erzeugt werden kann, ist ebenfalls der DE-OS 36 34 084 zu entnehmen.

Gegebenfalls weitere übliche Bestandteile können z. B. Reaktionsvermittler, Dispergiermittel, Vernetzungsmitteln oder aber auch Verarbeitungshilfsmittel, wie z. B. Entlüfter, sein. Diese Zusatzstoffe werden bezogen auf 100 Gewichtsteile des gesamten Gemisches in einer Konzentration von 0,05 bis 2 Gewichtsteile, bevorzugt 0,07 bis 1 Gewichtsteile, zugegeben.

Die Bereitstellung der Harzmischungen ist äußerst einfach. So wird eine Dispersion von 25 bis 50 Gewichtsteile (bezogen auf 100 Gewichtsteile der gesamten Mischung) eines oder mehrerer dreidimensional vernetzbarer Polyorganosiloxane mit gegebenenfalls Hilfsstoffen wie Vernetzungsmitteln, Dispergiermitteln, Katalysatoren sowie mit dem Epoxidharz und das Diamin und gegebenenfalls weiteren üblichen Zusatzstoffen vermischt. Diese Harzmischung ist lagerstabil bei Raumtemperatur. Weitere vorteilhafte Ausgestaltungen für die Herstellung der Harzmischung sind der DE-OS 36 34 084 zu entnehmen.

Bei dem RTM-Verfahren wird das im wesentlichen trockene Fasergut (z. B. Glas-, Kohlenstoff oder Aramidfaser) in Form von Gewebe, Geflechte, Gelege, Wirrfasermatten oder Vliesen in die Form eingelegt. Bevorzugt ist die Verwendung von Kohle- und Glasfasern.
Es erfolgt ein Preformen des Fasergutes, was im einfachsten Fall einem Vorpressen des mit einem Binder versehenden Fasergutes entspricht, um dieses lagerstabil in Form zu halten. Vor dem Einlegen des Fasergutes wird die Form mit Antihaftmitteln (Trennmitteln) versehen. Das kann eine feste Teflonschicht oder aber auch vor jeder Bauteilfertigung ein entsprechend aufgetragenes Mittel sein. Die Form wird geschlossen und die niedrigviskose Harzmischung unter üblichen Druck (< 6 bar) in die Form injiziert. Wenn anhand eines Steigers der Harzfüllstand in der Form erkannt werden kann, wird die Injektion abgebrochen.
Anschließend erfolgt die Aushärtung des Harzes und die Vernetzung der Polyorganosiloxanpartikel in der Form, was in der Regel durch Beheizen dieser unterstützt wird. Gleichzeitig erfolgt die Anbindung der Polyorganosiloxanpartikeln an die Epoxidharzmatrix durch Reaktion der reaktiven Gruppen des Polyorganosiloxans mit dem Epoxidharz. Die Vernetzungsdichte des ausgehärteten Harzes wird dadurch nicht herabgesetzt.
Ist die Aushärtung bzw. Vernetzung abgeschlossen, kann das Bauteil entnommen werden z. B. durch Unterstützung von Auswerfersystemen.

Die erfindungsgemäß hergestellten Produkte können - wie bereits erwähnt - in der Raumund Luftfahrt eingesetzt werden. Ein anderes Anwendungsgebiet wäre z. B. der Automobilbau.

Anhand eines Ausführungsbeispiel soll die Erfindung näher erläutert werden.

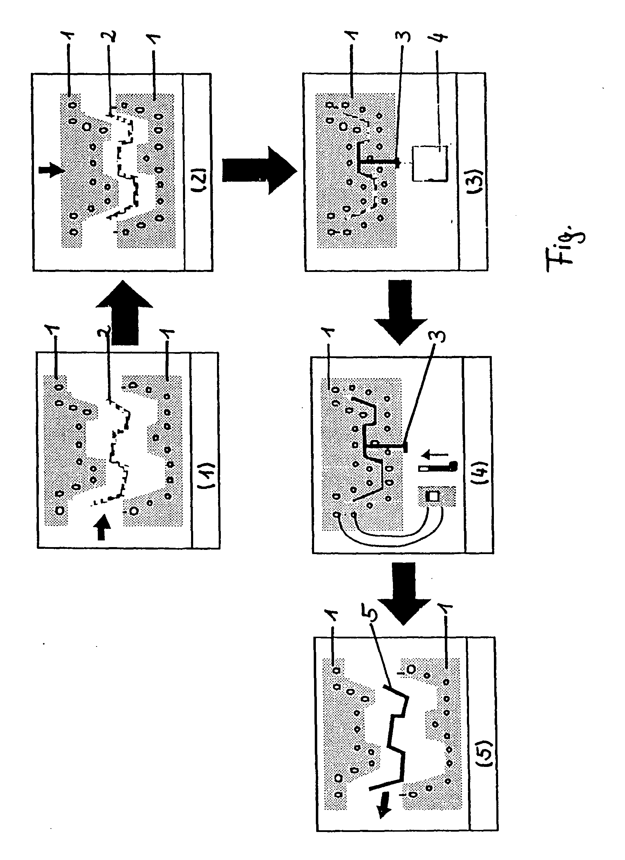

Es zeigt die einzige Figur schematisch den Ablauf im Resin-Transfer-Moulding Verfahren (RTM) in den Schritten (1) bis (5).

In einem nicht dargestellten Verfahrensschritt wird Fasergut 2 (3 mm starke Carbonfasermatte aus 8 Lagen Carbonfasern - Fa. Kramer 445 T, Faservolumenanteil 52 %) in einer Form durch Schließen dieser vorgeformt. Auf diesen Verfahrensschritt kann gegebenenfalls verzichtet werden. Als nächstes wird dieser Faservorformling 2 in die im Verfahrensschritt (1) dargestellte Form 1 eingelegt, wobei diese mit einem Trennmitteln beschichtet worden ist. Die Forml wird geschlossen (Verfahrensschritt (2)). Durch eine entsprechende Injektionsvorrichtung 3 wird die Harzmischung 4 in die Form 1 unter einem Druck von 4 bar eingebracht, wie im Verfahrensschritt (3) ersichtlich. Dabei ist es möglich die Harzkomponenten direkt in einer integrierten Mischeinrichtung in der Injektionsvorrichtung zu vermischen. Die Harzmischung, die für das erfindungsgemäße Verfahren verwendet wird, hat den Vorteil, dass sie bei Raumtemperatur lagerstabil ist, sodass unkompliziert ein Einkomponentensystem verwendet werden kann.

**Tab. 1 Harzmischung-Zusammensetzung**

| Bestandteil | Zusammensetzung [Gew.%] Stand der Technik | Zusammensetzung [Gew.%] Erfindungsgemäß |
|---|---|---|
| Epoxidharz Tetraglycidyldiaminodiphenylmethan | 69,4 | 63,6 |
| Diamin 4,4'-Diaminodiphenylmethan | 30,6 | 29,2 |
| Polyorganosiloxan | - | 7,0 |
| A530** | - | 0,2 |

| | | |
|---|---|---|
| ** Fa. Byk GmbH, Deutschland | | |

Untersuchungen an der gehärteten (2 °C/min auf 180 °C erhitzen, 60 min bei 180 °C) Harzmischung (Zusammensetzung Tab. 1) sind aus der Tabelle 2 ersichtlich:

**Tab. 2**

| Eigenschaften | Stand der Technik | Erfindungsgemäße Zusammensetzung |
|---|---|---|
| Glastemperatur [°C] | 217 | 217 |
| Glastemperatur [°C] gemessen nach Lagerung (14 Tage bei 70 °C) in destilliertem Wasser | 215 | 205 |
| Biegefestigkeit DIN 53452 ISO 178 [MPa] | 3100 | 3200 |
| Wasseraufnahme [%] gemessen nach Lagerung (14 Tage bei 70 °C) in destilliertem Wasser | 2,5 | 1,7 |
| Rissfortpflanzungsenergie [J/m²] | 160 | 250 |

Aus der Tabelle 2 wird deutlich, das die Wasseraufnahme (14 Tage bei 70 °C in destilliertem Wasser) der Harzmischung aus dem Stand der Technik höher ist als die der erfindungsgemäßen Harzmischung. Die verringerte Wasseraufnahmefähigkeit der erfindungsgemäßen Mischung bedeutet eine verbesserte Hydrolysebeständigkeit des Endproduktes. Weiterhin kann der Tabelle 2 entnommen werden, dass die Biegefestigkeit und die Rissfortpflanzungsenergie des erfindungsgemäßen Harzes im Vergleich zum Stand der Technik erhöht werden konnte, was ein Beleg für ein verbesserten Bruchverhalten der gehärteten Mischung ist.

Die in der Tab. 1 angegebenen Harzmischungen wurde in die Form 1 der einzigen Figur eingespritzt und mit einer Aufheizgeschwindigkeit von 2 °C/min von 30 °C bis 180 °C gehärtet (Verfahrensschritt (4)). Während der Aufheizung konnten keine Viskositätsunterschiede zwischen der Harzmischung aus dem Stand der Technik und der erfindungsgemäßen Harzmischung festgestellt werden. Die endgültige Aushärtung des Harzes erfolgte bei 180 °C 2 Stunden. Nach einer kurzen Abkühlphase wurde das Bauteil entnommnen (Verfahrensschritt (5)). Das faserverstärkte Produkt wies folgende Charakteristika auf:

**Tab. 3**

| Eigenschaften | Stand der Technik | Erfindungsgemäße Zusammensetzung |
|---|---|---|
| Glastemperatur [°C] | 216 | 205 |
| Biegefestigkeit | | |
| DIN 53452 ISO 178 [MPa] | | |
| Raumtemperatur | 693 | 881 |
| 120 °C | 611 | 656 |
| Kurzbiegefestigkeit | | |
| DAN 432 [MPa] | | |
| - 55 °C | 69 | 76 |
| Raumtemperatur | 58 | 61 |
| 120 °C | 38 | 44 |

Aus den Werten der Biegefestigkeit wird ersichtlich, dass Bauteile, die durch das erfindungsgemäße RTM-Verfahren hergestellt wurden, höheren mechanischen Belastungen stand halten als bisherig hergestellte Bauteile.

## Patentansprüche

1. Verfahren zur Herstellung eines faserverstärkten Produktes auf Epoxidharzbasis folgende Schritte enthaltend:
- Einlegen des Fasergutes (2) in eine Form (1) und Schließen der Form (1), wobei die Formgebung des Fasergutes (2) erfolgt,
- Injektion eines Gemisches (4) unter üblichem Druck,
- Vernetzung des Gemisches (4) und
- Entformen des Bauteils (5),
**dadurch gekennzeichnet, dass**
das Gemisch (4) bezogen auf 100 Gewichtsteile folgender Bestandteile aufweist:
i) 50 bis 70 Gewichtsteile eines Epoxidharzes,
ii) 25 bis 50 Gewichtsteile eines aromatischen Diamins und
iii) 2 bis 25 Gewichtsteile vernetzbare Elastomerpartikeln auf der Basis von Polyorganosiloxanen mit einem mittleren Partikeldurchmesser von 1· 10⁻⁸ m bis 5· 10⁻⁶ m und einem mittlerem Molekulargewicht von 1000 bis 100000, wobei im wesentlichen nur die Oberfläche der Elastomerpartikeln mit reaktiven Gruppen modifiziert worden ist, die in der Lage sind, mit einem Epoxidharz eine chemische Reaktion einzugehen.

2. Verfahren zur Herstellung eines faserverstärkten Produktes auf Epoxidharzbasis nach Anspruch 1 , wobei
das Gemisch (4) bezogen auf 100 Gewichtsteile folgender Bestandteile aufweist:
i) 60 bis 70 Gewichtsteile eines Epoxidharzes,
ii) 25 bis 35 Gewichtsteile eines aromatischen Diamins und
iii) 2 bis 5 Gewichtsteile vernetzbare Elastomerpartikeln auf der Basis von Polyorganosiloxanen mit einem mittleren Partikeldurchmesser von 1· 10⁻⁸ m bis 5 · 10⁻⁶ m und einem mittlerem Molekulargewicht von 1000 bis 100000, wobei im wesentlichen nur die Oberfläche der Elastomerpartikeln mit reaktiven Gruppen modifiziert worden ist, die in der Lage sind, mit einem Epoxidharz eine chemische Reaktion einzugehen.

3. Verfahren nach zumindest einem der vorhergehenden Ansprüche, **dadurch gekennzeichnet, dass** das Fasergut (2) vor dem Einlegen vorgeformt wird.

4. Verfahren nach zumindest einem der vorhergehenden Ansprüche, **dadurch gekennzeichnet, dass** das Einlegen des Fasergutes (2) in eine mit Trennmitteln beschichtete Form (1) erfolgt.

5. Verfahren nach zumindest einem der vorhergehenden Ansprüche, **dadurch gekennzeichnet, dass** das Gemisch 0,05 bis 2 Gewichtsteile weiterer üblicher Zusatzstoffe aufweist.

6. Verfahren nach zumindest einem der vorhergehenden Ansprüche, **dadurch gekennzeichnet, dass** ein multifunktionelles Epoxidharz verwendet wird.

7. Verfahren nach Anspruch 6, **dadurch gekennzeichnet, dass** ein tetrafunktionelles Epoxidharz verwendet wird.

8. Verfahren nach Anspruch 7, **dadurch gekennzeichnet, dass** als tetrafunktionelles Harz Tetraglycidyldiaminodiphenylmethan verwendet wird.

9. Verfahren nach zumindest einem der vorhergehenden Ansprüche, **dadurch gekennzeichnet, dass** als aromatisches Diamin Diaminodiphenylmethan eingesetzt wird.

10. Verfahren nach zumindest einem der vorhergehenden Ansprüche, **dadurch gekennzeichnet, dass** das aromatische Diamin in zumindest einer ortho-Position zu zumindest einer Aminogruppe eine Alkylgruppe, insbesondere eine Methyl-, Ethyl- oder Isopropylgruppe, aufweist.

11. Verfahren nach zumindest einem der vorhergehenden Ansprüche, **dadurch gekennzeichnet, dass** die modifizierten Elastomerpartikeln eine mittlere Partikelgröße von 1· 10⁻⁷ m bis 3· 10⁻⁶ m aufweisen.

12. Verfahren nach zumindest einem der vorhergehenden Ansprüche, **dadurch gekennzeichnet, dass** die Elastomerpartikeln ein mittleres Molekulargewicht von 1200 bis 30000 aufweisen.

13. Verwendung eines nach dem Verfahren nach zumindest Anspruch 1 hergestellten Produkt in der Luft- und Raumfahrt.

## Claims

1. Process for the production of a fibre-reinforced product based on epoxy resin comprising the following steps:
- placing the fibrous material (2) into a mould (1) and closing the mould (1), whereby the shaping of the fibrous material (2) takes place,
- injecting a mixture (4) under customary pressure,
- crosslinking the mixture (4), and
- demoulding the structural part (5),
**characterized in that**
the mixture (4), relative to 100 parts by weight of the following constituents, comprises:
i) 50 to 70 parts by weight of an epoxy resin,
ii) 25 to 50 parts by weight of an aromatic diamine, and
iii) 2 to 25 parts by weight of crosslinkable elastomer particles based on polyorganosiloxanes with an average particle diameter of 1 × 10⁻⁸ m to 5 × 10⁻⁶ m and an average molecular weight of 1000 to 100 000, with substantially only the surface of the elastomer particles having been modified with reactive groups capable of entering a chemical reaction with an epoxy resin.

2. Process for the production of a fibre-reinforced product based on epoxy resin according to Claim 1, wherein
the mixture (4), relative to 100 parts by weight of the following constituents, comprises:
i) 60 to 70 parts by weight of an epoxy resin,
ii) 25 to 35 parts by weight of an aromatic diamine, and
iii) 2 to 5 parts by weight of crosslinkable elastomer particles based on polyorganosiloxanes with an average particle diameter of 1 × 10⁻⁸ m to 5 × 10⁻⁶ m and an average molecular weight of 1000 to 100 000, with substantially only the surface of the elastomer particles having been modified with reactive groups capable of entering a chemical reaction with an epoxy resin.

3. Process according to at least one of the preceding claims, **characterized in that** the fibrous material (2) is preshaped before being placed into the mould.

4. Process according to at least one of the preceding claims, **characterized in that** the fibrous material (2) is placed into a mould (1) coated with release agents.

5. Process according to at least one of the preceding claims, **characterized in that** the mixture comprises 0.05 to 2 parts by weight of further customary additive substances.

6. Process according to at least one of the preceding claims, **characterized in that** a multifunctional epoxy resin is utilized.

7. Process according to Claim 6, **characterized in that** a tetrafunctional epoxy resin is utilized.

8. Process according to Claim 7, **characterized in that** tetraglycidyldiaminodiphenylmethane is utilized as tetrafunctional resin.

9. Process according to at least one of the preceding claims, **characterized in that** diaminodiphenylmethane is utilized as aromatic diamine.

10. Process according to at least one of the preceding claims, **characterized in that** the aromatic diamine has in at least one ortho position to at least one amino group an alkyl group, in particular a methyl, ethyl or isopropyl group.

11. Process according to at least one of the preceding claims, **characterized in that** the modified elastomer particles have an average particle size of 1 × 10⁻⁷ m to 3 × 10⁻⁶ m.

12. Process according to at least one of the preceding claims, **characterized in that** the elastomer particles have an average molecular weight of 1200 to 30 000.

13. Use of a product produced according to the process according to at least Claim 1 in aeronautical and astronautical engineering.

## Revendications

1. Procédé pour la fabrication d'un produit à base de résine époxy, renforcé avec des fibres, comportant les étapes suivantes :
- introduction de la matière fibreuse (2) dans un moule (1) et fermeture du moule (1), de sorte que s'effectue la mise en forme de la matière fibreuse (2),
- injection d'un mélange (4) sous la pression usuelle,
- réticulation du mélange (4) et
- démoulage de la pièce de construction (5),
**caractérisé en ce que** le mélange (4) comporte, pour 100 parties en poids, les composants suivants :
i) 50 à 70 parties en poids d'une résine époxy,
ii) 25 à 50 parties en poids d'une diamine aromatique et
iii) 2 à 25 parties en poids de particules élastomères réticulables à base de polyorganosiloxanes ayant un diamètre moyen de particule de 1×10⁻⁸ m à 5×10⁻⁶ m et une masse moléculaire moyenne de 1 000 à 100 000, essentiellement seulement la surface des particules élastomères ayant été modifiée par des groupes réactifs capable d'entrer en une réaction chimique avec une résine époxy.

2. Procédé pour la fabrication d'un produit à base de résine époxy, renforcé avec des fibres, selon la revendication 1, dans lequel le mélange (4) comporte, pour 100 parties en poids, les composants suivants :
i) 60 à 70 parties en poids d'une résine époxy,
ii) 25 à 35 parties en poids d'une diamine aromatique et
iii) 2 à 5 parties en poids de particules élastomères réticulables à base de polyorganosiloxanes ayant un diamètre moyen de particule de 1×10⁻⁸ m à 5×10⁻⁶ m et une masse moléculaire moyenne de 1 000 à 100 000, essentiellement seulement la surface des particules élastomères ayant été modifiée par des groupes réactifs capable d'entrer en une réaction chimique avec une résine époxy.

3. Procédé selon au moins l'une des revendications précédentes, **caractérisé en ce que** la matière fibreuse (2) est pré-moulée avant l'introduction.

4. Procédé selon au moins l'une des revendications précédentes, **caractérisé en ce que** l'introduction de la matière fibreuse (2) s'effectue dans un moule (1) tapissé d'agents de séparation.

5. Procédé selon au moins l'une des revendications précédentes, **caractérisé en ce que** le mélange comprend de 0,05 à 2 parties en poids d'autres additifs usuels.

6. Procédé selon au moins l'une des revendications précédentes, **caractérisé en ce qu'**on utilise une résine époxy multifonctionnelle.

7. Procédé selon la revendication 6, **caractérisé en ce qu'**on utilise une résine tétrafonctionnelle.

8. Procédé selon la revendication 7, **caractérisé en ce qu'**on utilise du tétraglycidyldiaminodiphényl-méthane en tant que résine tétrafonctionnelle.

9. Procédé selon au moins l'une des revendications précédentes, **caractérisé en ce qu'**on utilise du diaminodiphénylméthane en tant que diamine aromatique.

10. Procédé selon au moins l'une des revendications précédentes, **caractérisé en ce que** la diamine aromatique comporte un groupe alkyle, en particulier un groupe méthyle éthyle ou isopropyle, en au moins une position ortho par rapport à au moins un groupe amino.

11. Procédé selon au moins l'une des revendications précédentes, **caractérisé en ce que** les particules élastomères modifiées ont une taille moyenne de particule de 1×10⁻⁷ m à 3×10⁻⁶ m.

12. Procédé selon au moins l'une des revendications précédentes, **caractérisé en ce que** les particules élastomères ont une masse moléculaire moyenne de 1 200 à 30 000.

13. Utilisation d'un produit fabriqué conformément au procédé selon au moins la revendication 1, dans l'industrie aérospatiale.
